# EUROPEAN PATENT APPLICATION

(11) **EP 0 655 602 A1**
(43) Date of publication of application: **31.05.1995**
(21) Application number: 94306266.1
(22) Date of filing: 25.08.1994
(51) Int. Cl.: F42B 3/12, C06C 5/04, C06C 7/00

(54) **Auto-ignition air bag igniter assembly**

(30) Priority: 03.09.1993 US 116361
(71) Applicant: ICI AMERICAS INC., Wilmington, Delaware 19850 (US)
(72) Inventor: Evans, John Harold, Lansdale, PA 19446 (US)
(74) Representative: Ede, Eric

(57) **Abstract**

The present invention is directed to providing a means for a forward and backward cascade reaction in an autoignition assembly for automobile safety restraint air bags.

## Description

### BACKGROUND

The present invention is directed to an improved autoignition feature specifically for air bag igniters for automobiles and squibs in general.

The automotive industry has taken the decision to include safety restraint systems, such as air bags, in the driver's side of automobiles and is quickly applying this airbag technology to the passenger side as well. Part of that technology system includes a squib or igniter which, when signaled, ignites pyrotechnic material which then ignites an enhancer which energizes gas generating pellets. The gas released from the pellets fills an airbag with sufficient gas in a timely fashion to prevent serious injury to passengers in the front seat of an automobile in the event of a car accident.

An igniter, as disclosed in U.S. patent 3,971,320 the disclosure of which is incorporated herein by reference, is an important member in the calculus of filling an air bag. The igniter converts electrical signals into chemical ones. Once signaled the igniter promotes the forward reaction for the pyrotechnic material to insure that the gas filling means is initiated which operates to fill the air bag in the event of a car accident. A problem in this art is the life expectancy of the air bag/igniter assembly in the event there is no car accident. Specifically, one such problem is the ignition of the pyrotechnic enhancer without the corresponding ignition of the igniter itself. Past assemblies have shown that the pyrotechnic enhancer may be affected by some environmental initiator other than the igniter, leaving the igniter as a live pyrotechnic unit waiting to be initiated.

The present invention is directed to a means of completely initiating the pyrotechnics in an autoignition assembly in the event that the pyrotechnic enhancer or some other pyrotechnic member is first initiated instead of the igniter. As those skilled in this art may be quick to recognize, there will be far more unignited igniters than ignited ones since, happily, there are far fewer cars involved in accidents than those that are. Therefore, as a safety measure, the present invention provides a means to assure that the pyrotechnics and/or propellants of the entire air bag assembly ignite, if any portion of the assembly is initiated.

The present invention is found to be very useful for the purposes of air bag safety restraint systems and for squib assemblies, in general.

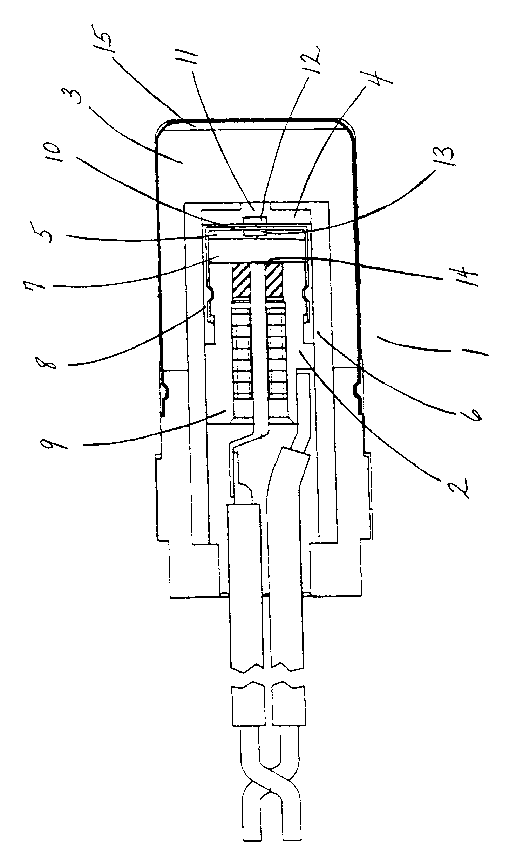

### BRIEF DESCRIPTION OF THE DRAWING

The Figure is an autoignition assembly showing the positions of the various pyrotechnics.

### SUMMARY OF THE INVENTION

An autoignition assembly wherein said assembly provides a means to complete relaxation of a single or plurality of pyrotechnic compositions within said assembly wherein an initiation of said assembly is first provided by said pyrotechnic composition within said assembly instead of an electrical signal translation derived from an igniter and communicated to said pyrotechnic composition. The autoignition assembly usually includes a means for a cascade of forward pyrotechnic reactions when the igniter means first translates electrical energy into the release of chemical energy. The present invention includes a means for a cascade of forward and backward pyrotechnic reactions when the igniter electrical translation means is not first initiated. Relaxation of a single or plurality of pyrotechnic compositions within said autoignition assembly means that the chemicals comprising each pyrotechnic composition react substantially to completion so that additional chemical reaction does not present a safety hazard to either passengers in the car or automobile craftspersons investigating the partially or totally spent autoignition assembly.

Referencing the Figure, an autoignition assembly, 1, is comprised of a plurality of members. An igniter, 2, which may be coaxial and hermetically sealed in encasement means, 8 and 9. Upon igniter initiation, pyrotechnic mix, 7, is ignited which, contemporaneous to 7 relaxation, ignites a second pyrotechnic composition, 5. The second pyrotechnic composition, 5, chemically reacts producing heat and thereby communicates with cup 10, transmitting sufficient energy to initiate and thereby communicate with a third pyrotechnic composition, 4. The energy from the second and third pyrotechnic compositions either singly or combined ignite enhancer, 3. The enhancer, 3, provides the energy to ignite and thus relax a fourth pyrotechnic composition, 15, which then provides the energy to react the pyrotechnic pellets, not shown, which when ignited release a gas which fills the air bag. It will be appreciated that due to the quickness of the pyrotechnic reactions or relaxations, sometimes referred to as explosions, that segregating the effect of each pyrotechnic reaction may lose meaning on an individual basis but provides significant energy transfer in the aggregate to provide the timely gas releasing function required for an operative autoignition assembly.

The third pyrotechnic composition, 4, is fixed in position by encasement 6. Encasement, 6, is provided with an orifice, 11, which aids communication between the third pyrotechnic composition, 4, and enhancer 3. This means for enhancing the cascade of pyrotechnic reactions is provided for the forward reaction. The forward reaction is usually associated with and a consequence of the ignition of the igniter, designed to ignite upon the impact of the automobile during an accident. In the event of an accident wherein the igniter assembly is activated, the assembly members communicate in sequence in a matter of milliseconds and are consumed during the event, relaxing any member pyrotechnic composition.

In the event there is no accident, a different scenario may be painted. No pyrotechnic composition is relaxed, leaving a first, second, and/or third pyrotechnic composition wanting and waiting for ignition, as well as the enhancer composition. Any number of incidents may occur to the igniter assembly in an automobile due to an accident or simply due to environmental conditions whereby the igniter is not the first initiated member of the autoignition assembly.

By way of example and not intended as a limitation hereof, enhancer, 3, may be ignited, thus stimulating the pelletized pyrotechnic composition that inflates the air bag. From all external appearances, the igniter assembly has performed. However, in disassembling the unit to replace it or in scrapping the automobile in general, the dismantler may be endangered by the as yet unignited igniter and companion pyrotechnic compositions.

In order to relax the pyrotechnic compositions, a backward reaction, as such, must be as efficiently cascaded and driven to completion as the forward cascade reaction. As contemplated by the present invention, should enhancer, 3, be first ignited, both a forward and backward reaction would occur. Said third pyrotechnic composition, 4, would be contemporaneously ignited, similarly to the pelletized pyrotechnic composition. While the pelletized pyrotechnic composition proceeds with the gas release reaction, the third pyrotechnic composition, 4, energizes communicating with cup 10 from the exterior of the igniter. The energy from 3 which thus communicates with cup 10 transfers and communicates with and thus initiates said second pyrotechnic composition 5. Said second pyrotechnic composition then transfers energy and thus communicates with said first pyrotechnic composition which completes the backward cascading reaction. The igniter itself may not fire, since the end portion of the igniter, 14, is the point of conversion of electric to the release of chemical energy. Since all of the pyrotechnic material has relaxed or, perhaps more appropriately characterized, reacted, the nonfiring of the electric means within the igniter is academic, posing little or no endangerment to life.

Optionally, an energy transfer means, 12 and/or 13, may be affixed to either or both sides of cup, 10. The energy transfer means may be a metal, metal combination, or metal alloy and provides energy transfer and therefore communication across the cup 10 to insure pyrotechnic relaxation. The metal may be any of the precious or transition metals and oxidized species thereof associated with the Periodic Chart, combinations thereof and/or therebetween. Preferably, the energy transfer means is a combination of aluminum-palladium.

All of the pyrotechnic compositions should be relationally compatible to insure that both the forward and backward cascade reactions occur. As those skilled in this art will recognize, the more vicinal the pyrotechnic composition in the cascade to each other, the closer mated the energies should be, more preferably the threshold energies should be mated. For example, the second and third pyrotechnic compositions must be able to transfer sufficient energy therebetween to initiate the energy release, backward and forward. The same must be true of the first and second pyrotechnic compositions as well as the third and enhancer compositions. Without the mateability of pyrotechnics the cascading reactions will be difficult to maintain. With such mateability, the autoignition assembly becomes directionally immune from environmental events, be they accidents or some other environmental hazard.

The second and third pyrotechnic compositions should remain vicinal to cup 10, in order to transfer energy across cup 10. It is most preferred if both the second and third pyrotechnic compositions, upon initiation, transform into a liquid phase rather than gas. Encasement member, 6, advantageously positions a slag or liquid physical phase about cup 10. Encasement member 6 thus facilitates the third pyrotechnic composition placement and additionally enhances the overall barrier protection for the igniter.

That barrier protections are important for long-life igniter endurance under normal environmental conditions is evidenced by a simulated test to which these assemblies are subjected. One such environmental test is a heat test which simulates aging of the assembly . Typically, an assembly must withstand being subjected to heat at 107 degrees centigrade for 400 hours and thereafter be able to perform according to specification. This simulated aging is promoted as approximating a ten year life span for the igniter in an automobile. The additional barrier protection, 6, provides additional protection and holds the third pyrotechnic composition in place. Importantly, any pyrotechnic composition made a member of the assembly must also be able to pass the heat test, as described hereinabove, to be commercially feasible.

Each of the pyrotechnic compositions within the cascade of reactions may be the same or similar. However, it is preferred that these compositions vary according to their specific characterizations. The first pyrotechnic composition may be comprised of titanium potassium perchlorate, zirconium potassium perchlorate or combinations thereof and/or therebetween. The second pyrotechnic composition may be comprised of lead styphnate, barium styphnate, lead mononitroresorcinate, sodium azide, zirconium potassium perchlorate, titanium potassium perchlorate, polynimmo and similar nitrated polymers, azide polymers, propellants, stable high explosives, combinations thereof and/or therebetween. The third pyrotechnic composition may be comprised of zirconium iron oxide silicon dioxide admixture, thermite compositions with a positive heat of reaction such as aluminum iron oxide, magnesium combined with PTFE (polytetrafluoroethylene), heat powders such as a calcium silicide and iron oxide admixture, boron potassium perchlorate, aluminum potassium perchlorate, titanium potassium perchlorate, and zirconium potassium perchlorate (sodium perchlorate may be conveniently substituted). The enhancer may be comprised of boron potassium nitrate. And finally, the fourth pyrotechnic composition may be comprised of nitrocellulose (a single base propellant) and/or the same members that comprise the pyrotechnics for the second pyrotechnic composition.

## Claims

1. An autoignition assembly wherein said assembly provides a means to complete relaxation of a single or plurality of pyrotechnic compositions within said assembly wherein an initiation of said assembly is first provided by said pyrotechnic composition within said assembly instead of an electrical signal translation derived from an igniter and communicated to said pyrotechnic composition.

2. The assembly in claim 1 wherein said means comprises a cascade of forward and backward pyrotechnic reactions.

3. The assembly in claim 1 wherein said means comprises a second and a third pyrotechnic composition wherein said compositions energetically communicate across a cup.

4. The assembly in claim 3 wherein said third pyrotechnic composition is positioned by an encasement.

5. The assembly in claim 3 wherein said third pyrotechnic composition is selected from the group consisting of a zirconium iron oxide silicon admixture, thermite compositions with a positive heat of reaction, magnesium in combination with PTFE, heat powders, boron potassium perchlorate, zirconium potassium perchlorate, combinations thereof and therebetween.

6. The assembly in claim 3 wherein said second and third pyrotechnic comprising an energy transfer means.

7. The assembly in claim 3 wherein said second pyrotechnic composition is selected from the group consisting of lead styphnate, barium styphnate, lead mononitroresorcinate, sodium azide, zirconium potassium perchlorate, titanium potassium perchlorate, polynimmo and similar nitrated polymers, azide polymers, propellants, stable high explosives, combinations thereof and therebetween.

8. The assembly in claim 3 wherein said third pyrotechnic is in a liquid phase.

9. The assembly in claim 1 wherein said means comprises a fourth pyrotechnic composition selected from the group consisting of lead styphnate, barium styphnate, lead mononitroresorcinate, sodium azide, zirconium potassium perchlorate, titanium potassium perchlorate, polynimmo and similar nitrated polymers, azide polymers, propellants, stable high explosives, nitrocellulose, combinations thereof and therebetween.

10. The assembly in claim 3 wherein said second and third pyrotechnic compositions are energetically mateable.

11. The method of using the assembly in claim 1 wherein said assembly is used to inflate driver's side air bags.

12. The method of using the assembly in claim 1 wherein said assembly is used to inflate passenger's side air bags.

13. The energy transfer means of claim 6 wherein said means comprises an aluminum-palladium combination.

14. The pyrotechnic composition of claim 1 wherein said composition is a propellant.
